# EUROPÄISCHE PATENTSCHRIFT

(11) **EP 3 056 126 B1**
(45) Veröffentlichungstag und Bekanntmachung des Hinweises auf die Patenterteilung: **01.11.2017**
(21) Anmeldenummer: 16000259.8
(22) Anmeldetag: 03.02.2016
(51) Int. Cl.: A47L 5/14, A01G 1/12, E01H 1/08, F01P 5/02, B08B 5/02

(54) **SAUG-/BLASGERÄT**
SUCTION/BLOWING DEVICE
APPAREIL DE SOUFFLAGE/D'ASPIRATION

(30) Priorität: 12.02.2015 DE 102015001811
(43) Veröffentlichungstag der Anmeldung: 17.08.2016
(73) Patentinhaber: Andreas Stihl AG & Co. KG, 71336 Waiblingen (DE)
(72) Erfinder: Schäffler, Kevin, 74199 Untergruppenbach (DE); Gindele, Cornelius, 73207 Plochingen (DE); Hittmann, Markus, 71384 Weinstadt (DE); Barth, Christian, 71404 Korb (DE)
(74) Vertreter: Reinhardt, Annette

(56) Entgegenhaltungen:
- EP-A2- 1 232 717
- WO-A1-2014/030755
- US-A1- 2009 241 285

## Beschreibung

Die Erfindung betrifft ein Saug-Blasgerät der im Oberbegriff des Anspruchs 1 angegebenen Gattung.

Aus der JP 2001-218705 A ist ein Saug-/Blasgerät bekannt, das ein Saugrohr aufweist. Zusätzlich ist ein Blasrohr vorgesehen. Zur Umschaltung zwischen Saugbetrieb und Blasbetrieb ist ein Ventil vorgesehen, das in der Ventilstellung für Saugbetrieb den angesaugten Luftstrom durch eine Austrittsöffnung für Sammelgut fördert und in einer zweiten Ventilstellung für Blasbetrieb den durch das Saugrohr angesaugten Luftstrom durch das parallel zum Saugrohr angeordnete Blasrohr fördert.

Aus der US 2009/0241285 A1 ist ein Saug-/Blasgerät mit einem am Gehäuse verstellbar gehaltenen Saugrohr bekannt. Im Saugbetrieb ist das Saugrohr mit einer Ansaugöffnung mit einem im Gehäuse angeordneten Gebläse verbunden. Im Blasbetrieb ist das Saugrohr an einer Ausblasöffnung aus dem Gehäuse angeordnet.

Der Erfindung liegt die Aufgabe zugrunde, ein Saug-Blasgerät der gattungsgemäßen Art zu schaffen, das einen einfachen Aufbau besitzt.

Diese Aufgabe wird durch ein Saug-Blasgerät mit den Merkmalen des Anspruchs 1 gelöst.

Es ist vorgesehen, dass die Umschalteinrichtung die Drehrichtung des Gebläses umschaltet. Im Blasbetrieb fördert das Gebläse einen Blasluftstrom durch das Saugrohr, dessen Strömungsrichtung von dem Gebläse zu der Ansaugöffnung gerichtet ist, also der Strömungsrichtung im Saugbetrieb entgegengerichtet. Dadurch wird lediglich ein einziges Rohr für Saugbetrieb und Blasbetrieb benötigt. Die Luft für den Blasbetrieb kann dadurch aus einem Bereich angesaugt werden, der von der Ansaugöffnung des Saugrohrs entfernt
angeordnet ist. Es wird lediglich ein Saugrohr benötigt, durch das im Saugbetrieb Luft und Sammelgut angesaugt werden und durch das im Blasbetrieb Luft ausgeblasen wird.

Vorteilhaft umfasst die Umschalteinrichtung ein Getriebe, über das der Antriebsmotor das Gebläse antreibt. Über die Auslegung der unterschiedlichen Getriebestufen sind auch unterschiedliche Drehgeschwindigkeiten für Saugbetrieb und Blasbetrieb einfach möglich. Dies ist insbesondere dann vorteilhaft, wenn der Antriebsmotor ein Verbrennungsmotor ist. Es kann jedoch auch vorgesehen sein, dass der Antriebsmotor ein Elektromotor ist. Der Elektromotor kann dabei kabelgebunden oder über eine Batterie oder über einen Akku mit Energie versorgt sein. Ein einfacher Aufbau ergibt sich, wenn die Umschalteinrichtung die Drehrichtung des Elektromotors umschaltet.

Um sowohl im Saugbetrieb als auch im Blasbetrieb gute Förderleistungen zu erreichen, ist vorteilhaft vorgesehen, dass das Gebläse ein Axialgebläse mit mindestens einem Gebläserad ist. Bevorzugt ist das Gebläse in dem Saugrohr angeordnet. Dadurch ergibt sich ein kompakter Aufbau. Das Gebläse ist insbesondere koaxial zur Längsmittelachse des Saugrohrs angeordnet. Die geförderte Luft strömt dabei vorteilhaft in einem Ringraum, durch den das Gebläserad den Luftstrom fördert. Innerhalb des Ringraums kann ein Gehäuse vorgesehen sein, in dem der Antriebsmotor sowie weitere Komponenten des Arbeitsgeräts angeordnet sein können. Das Gebläse wird im Saugbetrieb vorteilhaft zur Zerkleinerung des Sammelguts genutzt.

Vorteilhaft besitzt das Saug-/Blasgerät eine Eintrittsöffnung, die im Blasbetrieb stromauf des Saugrohrs angeordnet ist und durch die das Gebläse im Blasbetrieb Luft ansaugt. Vorteilhaft umfasst das Saug-/Blasgerät eine Austrittsöffnung für Sammelgut, die im Saugbetrieb stromab des Saugrohrs angeordnet ist. Das Saugrohr ist demnach vorteilhaft mit drei Öffnungen verbunden, nämlich der Ansaugöffnung für den Saugbetrieb, durch die im Blasbetrieb Luft ausgeblasen wird, einer Eintrittsöffnung für das Ansaugen von Luft für den Blasbetrieb sowie einer Austrittsöffnung zum Ausblasen von Sammelgut im Saugbetrieb. Vorteilhaft umfasst das Saug-/Blasgerät ein Ventil, das in einer ersten Schaltstellung eine Verbindung des Saugrohrs mit der Eintrittsöffnung herstellt, und in einer zweiten Schaltstellung eine Verbindung des Saugrohrs mit der Austrittsöffnung herstellt. In der ersten Schaltstellung ist das Saug-/Blasgerät demnach für den Blasbetrieb vorgesehen und in der zweiten Schaltstellung des Ventils für den Saugbetrieb.

Ein einfacher Aufbau ergibt sich, wenn das Ventil ein Kugelhahnventil ist. Ein Kugelhahnventil ermöglicht eine günstige Strömungsführung innerhalb des Ventils sowie einen großen Strömungsquerschnitt bei vergleichsweise geringen Außenabmessungen. Es kann jedoch auch vorgesehen sein, dass das Ventil als schwenkbare Klappe ausgebildet ist. Bei der Ausbildung des Ventils als schwenkbare Klappe kann vorgesehen sein, dass die Schaltstellung des Ventils automatisch in Abhängigkeit der Druckverhältnisse an der Klappe verstellt wird. Die Druckverhältnisse an der Klappe ändern sich dabei mit der Umschaltung der Drehrichtung des Gebläses. Besonders bevorzugt ist die Schaltstellung der Umschalteinrichtung jedoch an die Schaltstellung des Ventils gekoppelt. Zur Umschaltung zwischen Saugbetrieb und Blasbetrieb muss der Bediener dadurch lediglich das Ventil umstellen. Die Schaltstellung der Umschalteinrichtung und damit die Drehrichtung des Gebläses werden automatisch mit verstellt. Alternativ kann auch vorgesehen sein, dass der Bediener die Umschalteinrichtung umzustellen hat und die Schaltstellung des Ventils automatisch entsprechend verstellt wird. Eine einfache Gestaltung ergibt sich, wenn die Umschalteinrichtung einen Schalter umfasst, der von dem Ventilkörper des Ventils betätigt wird. Insbesondere bei der Ausbildung des Antriebsmotors als Elektromotor kann über den vom Ventilkörper des Ventils betätigten Schalter auf einfache Weise eine Umschaltung der Drehrichtung durch entsprechendes Umpolen des Antriebsmotors erfolgen.

Ausführungsbeispiele der Erfindung werden im Folgenden anhand der Zeichnung erläutert. Es zeigen:
- Fig. 1: eine schematische Schnittdarstellung durch ein Saug-/Blasgerät in einer ersten Schaltstellung für Blasbetrieb,
- Fig. 2: einen Schnitt entlang der Linie II-II in Fig. 1,
- Fig. 3: eine schematische Schnittdarstellung durch das Saug-/Blasgerät aus Fig. 1 in einer zweiten Schaltstellung für Saugbetrieb,
- Fig. 4: eine Schnittdarstellung eines Ausführungsbeispiels für eine Umschalteinrichtung in der Schaltstellung für Blasbetrieb,
- Fig. 5: eine Schnittdarstellung der Umschalteinrichtung aus Fig. 4 in der Schaltstellung für Saugbetrieb,
- Fig. 6: eine schematische Darstellung eines Ausführungsbeispiels eines Saug-/Blasgeräts,
- Fig. 7: eine schematische Darstellung einer Umschalteinrichtung in einer ersten Schaltstellung,
- Fig. 8: eine schematische Darstellung der Umschalteinrichtung aus Fig. 7 in einer zweiten Schaltstellung,
- Fig. 9: eine schematische Schnittdarstellung durch ein Ausführungsbeispiel eines Saug-/Blasgeräts in einer Schaltstellung für Blasbetrieb,
- Fig. 10: eine schematische Schnittdarstellung des Saug-/Blasgeräts aus Fig. 9 in der Schaltstellung für Saugbetrieb.

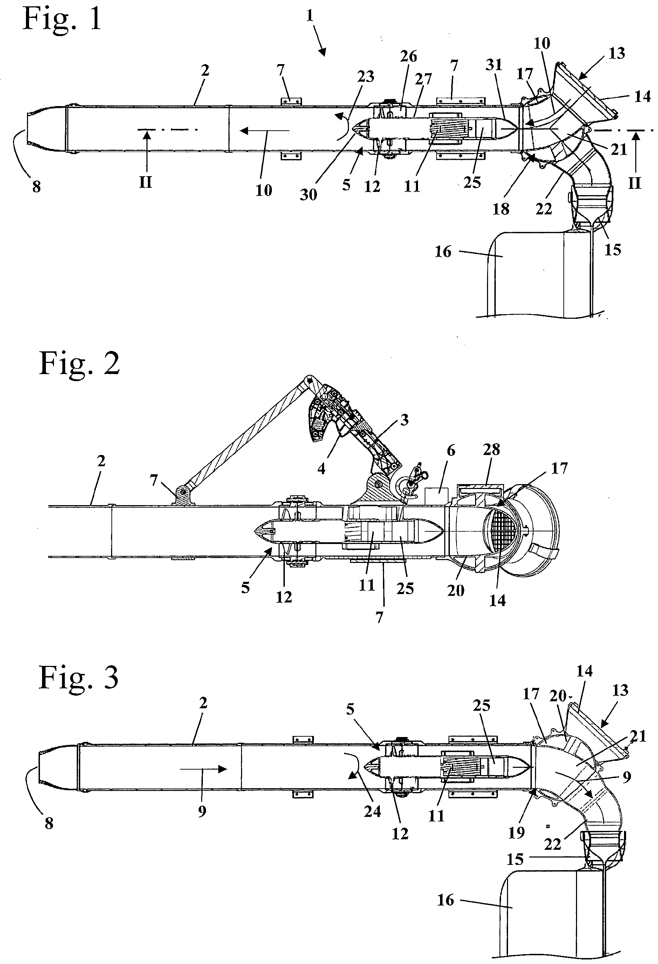

In Fig. 1 ist ein Saug-/Blasgerät 1 schematisch gezeigt. Das Saug-/Blasgerät 1 kann sowohl zum Ansaugen von Sammelgut wie beispielsweise Blättern oder dergleichen als auch zum Wegblasen von Schmutz, Blättern oder dergleichen genutzt werden. Das Saug-/Blasgerät 1 besitzt ein Saugrohr 2, in dem ein Gebläse 5 angeordnet ist. Das Gebläse 5 ist als Axialgebläse ausgebildet und besitzt im Ausführungsbeispiel ein Gebläserad 12. Es können jedoch auch mehrere Gebläseräder 12 vorgesehen sein. Auch ein oder mehrere fest im Saugrohr 2 gehaltene Leiträder können vorgesehen sein. Die Lüfterflügel des Laufrads 12 laufen in einem Ringraum 26 um, der innen von einer Innenwand 27 und an seiner Außenseite vom Saugrohr 2 begrenzt ist. Bevorzugt bildet das Laufrad 12 einen Abschnitt der Innenwand 27. Im Ausführungsbeispiel sind innerhalb der Innenwand 27 ein Elektromotor 11 sowie eine Steuerung 25 für den Elektromotor 11 angeordnet. Der Elektromotor 11 dient zum Antrieb des Gebläses 5. Der Elektromotor 11 und/oder die Steuerung 25 können jedoch auch außerhalb des Saugrohrs 2 angeordnet sein. In Fig. 1 ist das Saug-/Blasgerät 1 in der Stellung für den Blasbetrieb gezeigt. In dieser Schaltstellung dreht das Gebläserad 12 in einer ersten Drehrichtung 23 und fördert einen Blasluftstrom in einer Strömungsrichtung 10 durch das Saugrohr 2. Das Saugrohr 2 besitzt eine Ansaugöffnung 8, durch die der vom Gebläse 5 geförderte Luftstrom im Blasbetrieb austritt.

Bezogen auf die Strömungsrichtung 10 im Blasbetrieb ist an der stromab liegenden Seite der Innenwand 27 ein erstes Leitelement 30 und an der stromauf liegenden Seite ein zweites Leitelement 31 vorgesehen. Die Leitelemente 30 und 31 sind im Ausführungsbeispiel als an ihrem Außenumfang abgerundete Kegel ausgebildet und verringern den Strömungswiderstand im Saugrohr 2. Bezogen auf die Strömungsrichtung 10 ist stromauf des Gebläses 5 ein Ventil 17 vorgesehen. Fig. 1 zeigt das Ventil 17 in einer ersten Schaltstellung 18, die dem Blasbetrieb zugeordnet ist. In dieser Schaltstellung verbindet ein im Ventil 17 ausgebildeter Rohrabschnitt 21 das Saugrohr 2 mit einer Eintrittsöffnung 13, über die Blasluft aus der Umgebung angesaugt wird. Die Eintrittsöffnung 13 ist im Ausführungsbeispiel mit einem Gitter 14 abgedeckt, um das Einsaugen größerer Elemente in das Saugrohr 2 zu vermeiden. Die Eintrittsöffnung ist an der der Ansaugöffnung 8 abgewandt liegenden Seite des Saugrohrs 2 angeordnet.

Am Ventil 17 mündet ein Rohrstutzen 22, der in der in Fig. 1 gezeigten Schaltstellung 18 des Ventils 17 verschlossen ist. Der Rohrstutzen 22 besitzt eine Austrittsöffnung 15, an der ein in Fig. 1 schematisch gezeigter Sammelbehälter 16 für Sammelgut festgelegt ist.

Wie Fig. 1 zeigt, sind am Saugrohr 2 zwei Befestigungsmanschetten 7 vorgesehen. Wie Fig. 2 zeigt, dienen die Befestigungsmanschetten 7 zur Fixierung eines Handgriffs 3, an dem das Saug-/Blasgerät 1 von einem Bediener getragen und geführt werden kann. Am Handgriff 3, der in Fig. 2 schematisch dargestellt ist, ist ein Bedienelement 4 zur Bedienung des Elektromotors 11 schwenkbar gelagert.

Wie Fig. 2 zeigt, besitzt das Saug-/Blasgerät eine Umschalteinrichtung 6. Die Umschalteinrichtung 6 dient zur Umschaltung der Drehrichtung des Gebläses 5. Die Umschalteinrichtung 6 kann beispielsweise einen Schalter umfassen, der vom Bediener zu betätigen ist. Wie Fig. 2 zeigt, besitzt das Ventil 17 ein Bedienelement 28, das zur Umschaltung des Ventils 17 zwischen der in den Fig. 1 und 2 gezeigten ersten Schaltstellung 18 für den Blasbetrieb und der in Fig. 3 gezeigten zweiten Schaltstellung 19 für den Saugbetrieb dient. Im Ausführungsbeispiel ist das Bedienelement 28 als Drehknopf ausgebildet, mit dem ein Ventilkörper 20 des Ventils 17 zwischen den Schaltstellungen verstellt werden kann. Der Ventilkörper 20 ist näherungsweise kugelförmig ausgebildet. Im Ventilkörper 20 verläuft ein gekrümmter Rohrabschnitt 21. Um das Saug-Blasgerät 1 aus der in den Fig. 1 und 2 gezeigten Stellung für den Blasbetrieb in die in Fig. 3 gezeigte Stellung für den Saugbetrieb umzuschalten, muss der Bediener mit dem Bedienelement 28 den Ventilkörper 20 des Ventils 17 verstellen und das Ventil 17 aus der in Fig. 1 gezeigten ersten Schaltstellung 18 in die in Fig. 3 gezeigte zweite Schaltstellung 19 verstellen. Außerdem muss der Bediener die Umschalteinrichtung 6 betätigen, um die Drehrichtung des Gebläses 5 umzuschalten. Die Drehrichtung des Gebläses 5 wird vorteilhaft durch Umpolen des Elektromotors 11 umgeschaltet. Wie Fig. 3 zeigt, dreht das Gebläserad 12 im Saugbetrieb in einer zweiten Drehrichtung 24, die gegensinnig zur ersten Drehrichtung 23 im Blasbetrieb ist.

Der Rohrabschnitt 21 im Ventil 17 verbindet in der zweiten Schaltstellung 19 das Saugrohr 2 mit dem Rohrstutzen 22 und der am Rohrstutzen 22 ausgebildeten Austrittsöffnung 15. In der zweiten Drehrichtung 24 fördert das Gebläse 5 einen Saugluftstrom in einer Strömungsrichtung 9 durch das Saugrohr 2, die von der Ansaugöffnung 8 zur Austrittsöffnung 15 gerichtet ist. Im Saugbetrieb wird dadurch Sammelgut wie Blätter oder dergleichen durch die Ansaugöffnung 8 angesaugt, durch den Ringraum 26 am Gebläserad 12 gefördert und dabei zerkleinert und durch das Ventil 17 und den Rohrstutzen 22 in den an der Austrittsöffnung 15 angeordneten Sammelbehälter 16 gefördert. Das Ventil 17 ist als Kugelhahnventil ausgebildet. Der Durchmesser des freien Strömungsquerschnitts im Ventil 17 ist dabei größer als der Radius des Ventilkörpers 20. Dadurch kann ein sehr großer Strömungsquerschnitt bei geringer Baugröße des Ventils 17 erreicht werden. Wie Fig. 3 auch zeigt, ist in der zweiten Schaltstellung 19 des Ventils 17 die Eintrittsöffnung 13 vom Ventilkörper 20 verschlossen. Dadurch kann keine Luft über die Eintrittsöffnung 13 angesaugt oder durch die Eintrittsöffnung 13 ausgeblasen werden.

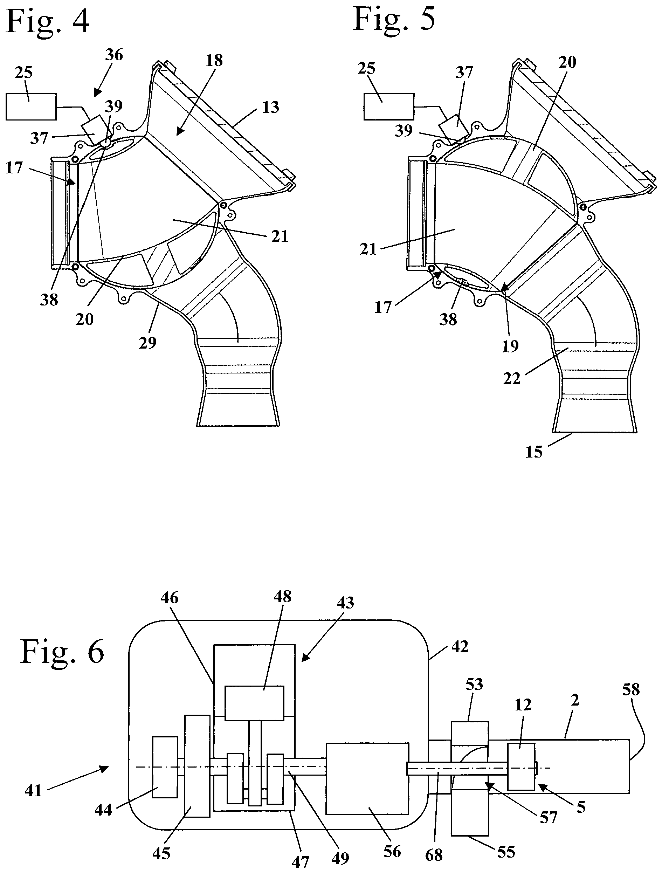

Die Fig. 4 und 5 zeigen ein Ausführungsbeispiel einer Umschalteinrichtung 36, die an einem Ventil 17 angeordnet ist. Die Umschalteinrichtung 36 umfasst einen Schalter 37, der vom Ventilkörper 20 des Ventils 17 betätigt ist. Das Ventil 37 besitzt einen Tastkörper 39, der an der Außenwand des Ventilkörpers 20 anliegt. In der in Fig. 4 gezeigten ersten Schaltstellung 18 liegt der Tastkörper 39 in einer Vertiefung 38 an der Außenseite des Ventilkörpers 20 an. Der Schalter 37 ist mit der Steuerung 25 verbunden, die über die Schaltstellung des Schalters 37 erkennt, dass das Ventil 17 sich in seiner ersten Schaltstellung 18 befindet. In dieser Schaltstellung verbindet der Rohrabschnitt 21 das Saugrohr 2 (Fig. 1) mit der Eintrittsöffnung 13.

Fig. 5 zeigt das Ventil 17 in der zweiten Schaltstellung 19 für den Saugbetrieb. In dieser Schaltstellung verbindet der Rohrabschnitt 21 im Ventilkörper 20 des Ventils 17 das Saugrohr 2 (Fig. 3) mit dem Rohrstutzen 22 und der Austrittsöffnung 15 zum Sammelbehälter 16. In dieser Stellung liegt der Tastkörper 39 an einem kugelförmigen Abschnitt des Ventilkörpers 20 an. Der Tastkörper 39 ist weiter eingedrückt als in der in Fig. 4 gezeigten Stellung. Die Steuerung 25 kann dadurch erkennen, dass sich das Ventil 17 in der zweiten Schaltstellung 19 befindet. Vorzugsweise ist der Schalter 37 so angeordnet, dass die Steuerung 25 auch erkennt, wenn sich das Ventil 17 in Zwischenstellungen befindet und in diesen Zwischenstellungen beispielsweise der Elektromotor 11 nicht angetrieben wird.

Fig. 6 zeigt ein weiteres Ausführungsbeispiel eines Saug-/Blasgeräts 41. Das Saug-/Blasgerät 41 besitzt ein Gehäuse 42, in dem als Antriebsmotor ein Verbrennungsmotor 43 angeordnet ist. Der Verbrennungsmotor 43 besitzt eine Anwerfvorrichtung 44. Im Ausführungsbeispiel ist zwischen der Anwerfvorrichtung 44 und einem Kurbelgehäuse 47 des Verbrennungsmotors 43 ein Lüfterrad 45 zur Förderung von Kühlluft vorgesehen. Der Verbrennungsmotor 43 besitzt einen Zylinder 46, in dem ein Kolben 48 hin- und hergehend angetrieben ist. Der Kolben 48 treibt eine Kurbelwelle 49 rotierend an. Die Kurbelwelle 49 ist im Kurbelgehäuse 47 rotierend gelagert. Der Verbrennungsmotor 43 kann beispielsweise ein Zweitaktmotor, insbesondere ein mit Spülvorlage arbeitender Zweitaktmotor, oder ein Viertaktmotor, insbesondere ein gemischgeschmierter Viertaktmotor sein. Die Kurbelwelle 49 ist über eine Umschalteinrichtung 56 mit einer Antriebswelle 68 verbunden. Die Umschalteinrichtung 56 dient zur Umkehr der Drehrichtung der Antriebswelle 68. Die Antriebswelle 68 treibt ein Gebläserad 12 des Gebläses 5 rotierend an. Das Gebläse 5 ist in einem Saugrohr 2 angeordnet. Der konstruktive Aufbau entspricht vorteilhaft im Wesentlichen dem in den Fig. 1 bis 3 gezeigten Aufbau.

Das Saugrohr 2 besitzt eine Ansaugöffnung 58. Im Ausführungsbeispiel ist an der der Ansaugöffnung 58 gegenüberliegenden Seite des Gebläses 5 ein Ventil 57 angeordnet, das den Innenraum des Saugrohrs 2 entweder mit einer Eintrittsöffnung 53 oder einer Austrittsöffnung 55 verbindet. Zur Umschaltung des Saug-/Blasgeräts 41 zwischen dem Saugbetrieb und dem Blasgerät muss der Bediener zum einen über die Umschalteinrichtung 56 die Drehrichtung der Antriebswelle 68 umschalten und zum anderen durch Betätigen des Ventils 57 die Verbindung des Saugrohrs 2 mit der Eintrittsöffnung 53 bzw. der Austrittsöffnung 55 ändern. Dabei ist die Ansaugöffnung 58 beim Blasbetrieb mit der Eintrittsöffnung 53 und beim Saugbetrieb mit der Austrittsöffnung 55 zu verbinden.

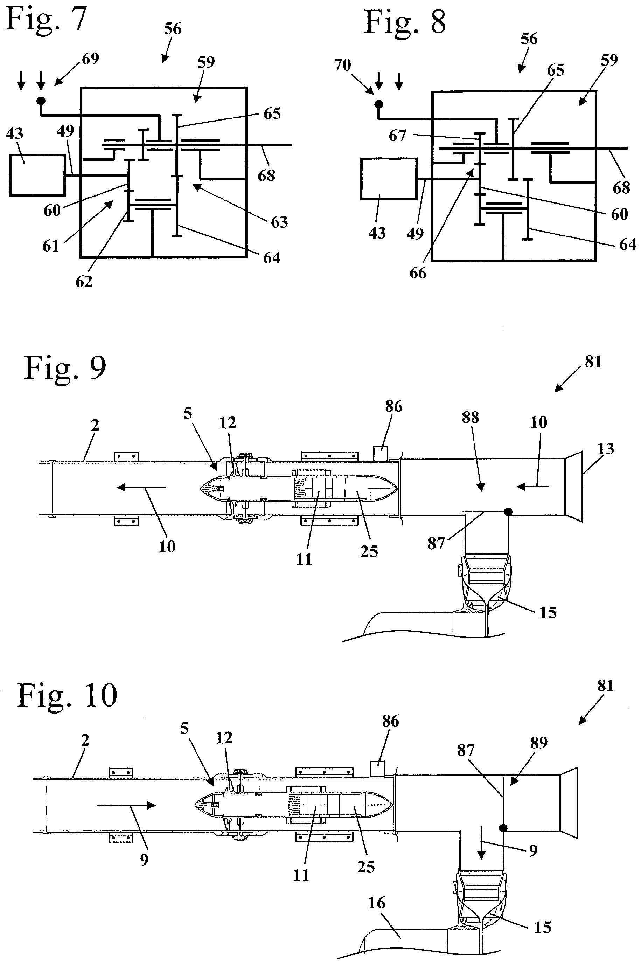

Die Fig. 7 und 8 zeigen schematisch den Aufbau der Umschalteinrichtung 56. Die Umschalteinrichtung 56 besitzt ein Getriebe 59, das ein mit der Kurbelwelle 49 verbundenes Eingangszahnrad 60 besitzt. Fig. 7 zeigt die Umschalteinrichtung in einer ersten Getriebeschaltstellung 69, und Fig. 8 zeigt die Umschalteinrichtung 56 in einer zweiten Getriebeschaltstellung 70. In der in Fig. 7 gezeigten ersten Getriebeschaltstellung drehen die Kurbelwelle 49 und die Antriebswelle 68 gleichsinnig. Die Kurbelwelle 49 ist über eine erste Getriebestufe 61 und eine zweite Getriebestufe 63 mit der Antriebswelle 68 verbunden. Die erste Getriebestufe 61 umfasst das Eingangszahnrad 60 sowie ein zweites Zahnrad 62, das mit dem Eingangszahnrad 60 kämmt. Im Ausführungsbeispiel besitzen die Zahnräder 60 und 62 die gleiche Zähnezahl. Die zweite Getriebestufe 63 umfasst ein erstes Zahnrad 64 und ein zweites, mit dem ersten Zahnrad 64 in Eingriff stehendes Zahnrad 65. Das erste Zahnrad 64 ist drehfest mit dem zweiten Zahnrad 62 der ersten Getriebestufe 61 verbunden. Das zweite Zahnrad 65 ist drehfest mit der Antriebswelle 68 verbunden. Auch die Zahnräder 64 und 65 besitzen die gleiche Zähnezahl. Dadurch ist die Drehzahl der Antriebswelle 68 des Gebläses 5 genauso groß wie die Drehzahl der Kurbelwelle 49.

Bei der in Fig. 8 gezeigten zweiten Getriebeschaltstellung 70 ist die Verbindung zwischen dem ersten Zahnrad 64 und dem zweiten Zahnrad 65 der zweiten Getriebestufe 63 unterbrochen. Das Eingangsrad 60 steht mit einem zweiten Zahnrad 67 in Eingriff und bildet mit diesem eine erste Getriebestufe 66. Das zweite Zahnrad 67 ist drehfest an der Antriebswelle 68 gehalten. Vorzugsweise besitzt das zweite Zahnrad 67 die gleiche Zähnezahl wie das Eingangszahnrad 60, so dass die Kurbelwelle 49 und die Antriebswelle 68 die gleiche Drehzahl aufweisen. Die Drehrichtungen der Kurbelwelle 49 und der Antriebswelle 68 sind dabei gegensinnig. Über die Umschalteinrichtung 56 lässt sich auf einfache Weise eine Umschaltung der Drehrichtung des Gebläses 5 erreichen. Das Getriebe 59 der Umschalteinrichtung 56 kann auch mit einem Elektromotor zum Einsatz kommen. Um eine einfache Bedienung zu erreichen, können die Getriebeschaltstellungen 69 und 70 der Umschalteinrichtung 56 an die Stellung des Ventils 57 (Fig. 6) gekoppelt sein. Wenn der Bediener das Ventil 57 umschaltet, wird dabei automatisch auch die Schaltstellung der Umschaltstellung 56 geändert oder umgekehrt.

Die Fig. 9 und 10 zeigen ein Ausführungsbeispiel eines Saug-/Blasgeräts 81, dessen Aufbau im Wesentlichen dem Aufbau des Saug-/Blasgeräts 1 entspricht. Gleiche Bezugszeichen bezeichnen dabei in allen Figuren einander entsprechende Elemente. Das Saug-/Blasgerät 81 besitzt ein Ventil 87. Fig. 9 zeigt das Blasgerät 81 in der Stellung für den Blasbetrieb. Das Ventil 87 befindet sich beim Blasbetrieb in einer ersten Schaltstellung 88, in der die Eintrittsöffnung 13 mit dem Saugrohr 2 verbunden und die Verbindung zur Austrittsöffnung 15 verschlossen ist. Das Gebläse 5 fördert durch das Saugrohr 2 einen Luftstrom in einer Strömungsrichtung 10. Die Luft wird über die Eintrittsöffnung 13 in das Saugrohr 2 angesaugt. Zur Umschaltung zwischen Saugbetrieb und Blasbetrieb sind eine Umschalteinrichtung 86 sowie das Ventil 87 vorgesehen. Die Umschalteinrichtung 86 ist vom Bediener zu betätigen und stellt die Drehrichtung des Gebläses 5 um.

In Fig. 10 ist das Ventil 87, das als Klappe ausgebildet ist, in einer zweiten Schaltstellung 89 gezeigt. In dieser Stellung verschließt das Ventil 87 die Verbindung zur Eintrittsöffnung 13 und verbindet das Saugrohr 2 mit der Austrittsöffnung 15, an der ein Sammelbehälter 16 für Sammelgut angeordnet ist. Es kann vorgesehen sein, dass das Ventil 87 vom Bediener zwischen der ersten Schaltstellung 88 und der zweiten Schaltstellung 89 umzuschalten ist. Vorteilhaft ist die Umschalteinrichtung 86 an die Stellung des Ventils 87 gekoppelt, so dass der Bediener lediglich das Ventil 87 umzustellen hat und die Umschalteinrichtung 86 bei der Verstellung des Ventils 87 in die zugeordnete Schaltstellung umgeschaltet wird. Es kann jedoch auch vorgesehen sein, dass der Bediener lediglich die Umschalteinrichtung 86 umzuschalten hat und das Ventil 87 aufgrund der im Saugrohr 2 herrschenden Druckverhältnisse umgeschaltet wird. Hierzu ist das Ventil 87 vorteilhaft in Richtung auf die in Fig. 10 gezeigte zweite Schaltstellung 89 gefedert. Wird das Saug-/Blasgerät 81 von der in Fig. 10 gezeigten Stellung für den Saugbetrieb in die in Fig. 9 gezeigte Stellung für den Blasbetrieb umgeschaltet, so bewirkt der Unterdruck im Saugrohr 2 ein Verschwenken des Ventils 87 in die erste Schaltstellung 88. Dies erfolgt aufgrund des erhöhten Strömungswiderstandes im Sammelbehälter 16. Auch eine andere Betätigung des Ventils 87 kann vorgesehen sein. Auch das Saug-/Blasgerät 81 kann anstatt des Elektromotors 81 von einem Verbrennungsmotor angetrieben sein.

## Patentansprüche

1. Saug-/Blasgerät mit einem Gebläse (5), das im Saugbetrieb einen Saugluftstrom durch ein Saugrohr (2) des Saug-/Blasgeräts (1, 41, 81) ansaugt, wobei das Gebläse (5) von einem Antriebsmotor angetrieben ist, wobei die Strömungsrichtung (9) des Saugluftstroms von einer Ansaugöffnung (8) des Saugrohrs (2) zum Gebläse (5) gerichtet ist, wobei das Saug-/Blasgerät (1) eine Umschalteinrichtung (6, 36, 56, 86) zur Umschaltung zwischen Saugbetrieb und Blasbetrieb aufweist, und wobei das Gebläse (5) im Blasbetrieb einen Blasluftstrom durch das Saugrohr (2) fördert, dessen Strömungsrichtung (10) von dem Gebläse (5) zu der Ansaugöffnung (8) gerichtet ist,
**dadurch gekennzeichnet, dass** die Umschalteinrichtung (6, 36, 56, 86) die Drehrichtung (23, 24) des Gebläses (5) umschaltet.

2. Saug-/Blasgerät nach Anspruch 1,
**dadurch gekennzeichnet, dass** die Umschalteinrichtung (56) ein Getriebe (59) umfasst, über das der Antriebsmotor das Gebläse (5) antreibt.

3. Saug-/Blasgerät nach Anspruch 1 oder 2,
**dadurch gekennzeichnet, dass** der Antriebsmotor ein Verbrennungsmotor (43) ist.

4. Saug-/Blasgerät nach Anspruch 1 oder 2,
**dadurch gekennzeichnet, dass** der Antriebsmotor ein Elektromotor (11) ist.

5. Saug-Blasgerät nach Anspruch 4,
**dadurch gekennzeichnet, dass** die Umschalteinrichtung (6, 36, 86) die Drehrichtung des Elektromotors (11) umschaltet.

6. Saug-Blasgerät nach einem der Ansprüche 1 bis 5,
**dadurch gekennzeichnet, dass** das Gebläse (5) ein Axialgebläse mit mindestens einem Gebläserad (12) ist.

7. Saug-Blasgerät nach einem der Ansprüche 1 bis 6,
**dadurch gekennzeichnet, dass** das Gebläse (5) in dem Saugrohr (2) angeordnet ist.

8. Saug-Blasgerät nach einem der Ansprüche 1 bis 7,
**dadurch gekennzeichnet, dass** das Saug-Blasgerät (1, 41, 81) eine Eintrittsöffnung (13, 53) aufweist, die im Blasbetrieb stromauf des Saugrohrs (2) angeordnet ist und durch die das Gebläse (5) im Blasbetrieb Luft ansaugt.

9. Saug-/Blasgerät nach Anspruch 8,
**dadurch gekennzeichnet, dass** das Saug-Blasgerät (1, 41, 81) eine Austrittsöffnung (15, 55) für Sammelgut umfasst, die im Saugbetrieb stromab des Saugrohrs (2) angeordnet ist.

10. Saug-/Blasgerät nach Anspruch 9,
**dadurch gekennzeichnet, dass** das Saug-Blasgerät (1, 41, 81) ein Ventil (17, 57, 87) umfasst, das in einer ersten Schaltstellung (18) eine Verbindung des Saugrohrs (2) mit der Eintrittsöffnung (13, 53) herstellt und in einer zweiten Schaltstellung (19) eine Verbindung des Saugrohrs (2) mit der Austrittsöffnung (15, 55) herstellt.

11. Saug-Blasgerät nach Anspruch 10,
**dadurch gekennzeichnet, dass** das Ventil (17) ein Kugelhahnventil ist.

12. Saug-Blasgerät nach Anspruch 10,
**dadurch gekennzeichnet, dass** das Ventil (87) als schwenkbare Klappe ausgebildet ist.

13. Saug-/Blasgerät nach einem der Ansprüche 10 bis 12,
**dadurch gekennzeichnet, dass** die Schaltstellung der Umschalteinrichtung (36) an die Schaltstellung (18, 19) des Ventils (17) gekoppelt ist.

14. Saug-Blasgerät nach Anspruch 13,
**dadurch gekennzeichnet, dass** die Umschalteinrichtung (36) einen Schalter (37) umfasst, der von dem Ventilkörper (20) des Ventils (17) betätigt wird.

## Claims

1. Suction/blowing device, comprising a fan (5), which in the suction mode draws in a suction air stream through a suction pipe (2) of the suction/blowing device (1, 41, 81), wherein the fan (5) is driven by a drive motor, wherein the flow direction (9) of the suction air stream is oriented from an intake opening (8) of the suction pipe (2) towards the fan (5), wherein the suction/blowing device (1) comprises a switch-over device (6, 36, 56, 86) for switching between suction mode and blowing mode, and wherein the fan (5) delivers in the blowing mode a blowing air stream through the suction pipe (2), the flow direction (10) of which is oriented from the fan (5) towards the intake opening (8),
**characterised in that** the switch-over device (6, 36, 56, 86) switches the direction of rotation (23, 24) of the fan (5).

2. Suction/blowing device according to claim 1,
**characterised in that** the switch-over device (56) comprises a gear mechanism (59), via which the drive motor drives the fan (5).

3. Suction/blowing device according to claim 1 or 2,
**characterised in that** the drive motor is an internal combustion engine (43).

4. Suction/blowing device according to claim 1 or 2,
**characterised in that** the drive motor is an electric motor (11).

5. Suction/blowing device according to claim 4,
**characterised in that** the switch-over device (6, 36, 86) switches the direction of rotation of the electric motor (11).

6. Suction/blowing device according to any of claims 1 to 5,
**characterised in that** the fan (5) is an axial-flow fan with at least one impeller (12).

7. Suction/blowing device according to any of claims 1 to 6,
**characterised in that** the fan (5) is located in the suction pipe (2).

8. Suction/blowing device according to any of claims 1 to 7,
**characterised in that** the suction/blowing device (1, 41, 81) has an inlet port (13, 53), which is located upstream of the suction pipe (2) in the blowing mode and through which the fan (5) draws in air in the blowing mode.

9. Suction/blowing device according to claim 8,
**characterised in that** the suction/blowing device (1, 41, 81) has an outlet port (15, 55) for collected material, which is located downstream of the suction pipe (2) in the suction mode.

10. Suction/blowing device according to claim 9,
**characterised in that** the suction/blowing device (1, 41, 81) comprises a valve (17. 57, 87), which establishes a connection between the suction pipe (2) and the inlet port (13, 53) in a first switching position (18) and establishes a connection between the suction pipe (2) and the outlet port (15, 55) in a second switching position (19).

11. Suction/blowing device according to claim 10,
**characterised in that** the valve (17) is a ball valve.

12. Suction/blowing device according to claim 10,
**characterised in that** the valve (87) is designed as a pivotable flap.

13. Suction/blowing device according to any of claims 10 to 12,
**characterised in that** the switching position of the switch-over device (36) is coupled to the switching position (18, 19) of the valve (17).

14. Suction/blowing device according to claim 13,
**characterised in that** the switch-over device (36) comprises a switch (37), which is actuated by the valve body (20) of the valve (17).

## Revendications

1. Appareil de soufflage/d'aspiration avec une soufflante (5) qui, en mode d'aspiration, aspire un courant d'air d'aspiration à travers un tube d'aspiration (2) dudit appareil de soufflage/d'aspiration (1, 41, 81), la soufflante (5) étant entraînée par un moteur d'entraînement, le sens d'écoulement (9) du courant d'air d'aspiration étant dirigé à partir d'une ouverture d'aspiration (8) du tube d'aspiration (2) vers la soufflante (5), l'appareil de soufflage/d'aspiration (1) comportant un dispositif d'inversion (6, 36, 56, 86) pour une inversion entre le mode d'aspiration et le mode de soufflage, et la soufflante (5), en mode de soufflage, refoulant un courant d'air de soufflage à travers le tube d'aspiration (2), dont le sens d'écoulement (10) est dirigé à partir de la soufflante (5) vers l'ouverture d'aspiration (8),
**caractérisé en ce que** le dispositif d'inversion (6, 36, 56, 86) inverse le sens de rotation (23, 24) de la soufflante (5).

2. Appareil de soufflage/d'aspiration selon la revendication 1,
**caractérisé en ce que** le dispositif d'inversion (56) comprend une transmission (59) par l'intermédiaire de laquelle le moteur d'entraînement entraîne la soufflante (5).

3. Appareil de soufflage/d'aspiration selon la revendication 1 ou 2,
**caractérisé en ce que** le moteur d'entraînement est un moteur à combustion interne (43).

4. Appareil de soufflage/d'aspiration selon la revendication 1 ou 2,
**caractérisé en ce que** le moteur d'entraînement est un moteur électrique (11).

5. Appareil de soufflage/d'aspiration selon la revendication 4,
**caractérisé en ce que** le dispositif d'inversion (6, 36, 86) inverse le sens de rotation du moteur électrique (11).

6. Appareil de soufflage/d'aspiration selon l'une des revendications 1 à 5,
**caractérisé en ce que** la soufflante (5) est une soufflante axiale avec au moins une roue de soufflante (12).

7. Appareil de soufflage/d'aspiration selon l'une des revendications 1 à 6,
**caractérisé en ce que** la soufflante (5) est disposée dans le tube d'aspiration (2).

8. Appareil de soufflage/d'aspiration selon l'une des revendications 1 à 7,
**caractérisé en ce que** l'appareil de soufflage/d'aspiration (1, 41, 81) présente une ouverture d'entrée (13, 53) qui, en mode de soufflage, est disposée en amont du tube d'aspiration (2) et par laquelle la soufflante (5), en mode de soufflage, aspire l'air.

9. Appareil de soufflage/d'aspiration selon la revendication 8,
**caractérisé en ce que** l'appareil de soufflage/d'aspiration (1, 41, 81) comporte une ouverture de sortie (15, 55) pour les produits ramassés, qui est disposée, en mode d'aspiration, en aval du tube d'aspiration (2).

10. Appareil de soufflage/d'aspiration selon la revendication 9,
**caractérisé en ce que** l'appareil de soufflage/d'aspiration (1, 41, 81) comprend une soupape (17, 57, 87) qui, dans une première position de manoeuvre (18), réalise une liaison entre le tube d'aspiration (2) et l'ouverture d'entrée (13, 53) et, dans une seconde position de manoeuvre (19), réalise une liaison entre le tube d'aspiration (2) et l'ouverture de sortie (15, 55).

11. Appareil de soufflage/d'aspiration selon la revendication 10,
**caractérisé en ce que** la soupape (17) est une soupape à bille.

12. Appareil de soufflage/d'aspiration selon la revendication 10,
**caractérisé en ce que** la soupape (87) est conçue comme un clapet pivotant.

13. Appareil de soufflage/d'aspiration selon l'une des revendications 10 à 12,
**caractérisé en ce que** la position de manoeuvre du dispositif d'inversion (36) est couplée à la position de manoeuvre (18, 19) de la soupape (17).

14. Appareil de soufflage/d'aspiration selon la revendication 13,
**caractérisé en ce que** le dispositif d'inversion (36) comprend un commutateur (37) qui est actionné par le corps (20) de la soupape (17).
